# FASCICULE DE BREVET EUROPEEN

(11) **EP 1 395 156 B1**
(45) Date de publication et mention de la délivrance du brevet: **02.02.2005**
(21) Numéro de dépôt: 02730396.5
(22) Date de dépôt: 06.05.2002
(51) Int. Cl.: A47J 37/08

(54) **GRILLE-PAIN ELECTRIQUE**
ELEKTRISCHER TOASTER
ELECTRIC TOASTER

(30) Priorité: 14.05.2001 FR 0106680
(43) Date de publication de la demande: 10.03.2004
(73) Titulaire: SEB S.A., 69130 Ecully (FR)
(72) Inventeur: ARNEDO, Julian, E-08031 Barcelona (ES); BASORA, Antonio, E-08028 Barcelona (ES)
(74) Mandataire: Kiehl, Hubert
(86) Numéro de dépôt international: PCT/FR2002/001553
(87) Numéro de publication internationale: WO 2002/091892

(56) Documents cités:
- EP-A- 0 845 235
- FR-A- 2 729 285
- US-A- 5 072 662
- US-A- 5 901 638

## Description

La présente invention concerne un grille-pain dont le boîtier comporte une enceinte de grillage présentant une ouverture supérieure pour l'introduction du pain et renfermant au moins un élément chauffant électrique, au moins un chariot porte-pain mobile verticalement dans l'enceinte entre une position d'éjection et une position de grillage, un entraîneur lié au chariot porte-pain, monté coulissant sur une colonne verticale, et comportant une poignée permettant d'abaisser le chariot porte-pain de la position d'éjection, en laquelle l'entraîneur est rappelé par un moyen élastique, à la position de grillage en laquelle l'entraîneur est retenu par un moyen déverrouillable et en laquelle un doigt solidaire de l'entraîneur ferme un interrupteur de fin de course.

L'invention concerne plus particulièrement un grille-pain dont l'entraîneur est équipé d'un amortisseur de remontée comprenant un piston coulissant verticalement dans un logement solidaire de l'entraîneur sur une course déterminée et dont la face supérieure est susceptible de venir en contact avec une butée située dans la partie haute du boîtier, ainsi qu'un moyen élastique disposé entre ledit piston et l'entraîneur.

Un tel amortisseur monté sur l'entraîneur d'un grille-pain est décrit dans le brevet français FR9500377 au nom de la Demanderesse. Toutefois, l'amortisseur décrit n'est pas entièrement satisfaisant car il accroît la complexité et l'encombrement de l'entraîneur. De plus, ce dispositif n'apporte pas de solution efficace au problème du coulissement de l'entraîneur le long de la colonne verticale. En effet, pour obtenir un fonctionnement sans incident du grille-pain, il faut s'assurer que l'entraîneur coulisse le long de la colonne sans risque de blocage.

Dans ce but, la colonne verticale peut être lubrifiée avec de la graisse. Mais cette solution n'est pas facile à mettre en oeuvre lors de la construction du grille-pain et la tenue dans le temps de la graisse n'est pas suffisamment fiable, notamment en raison de la proximité des éléments chauffants.

Une autre solution, décrite dans le brevet FR9500377, consiste à équiper l'entraîneur de roulettes de guidage qui prennent appui sur la colonne verticale. L'usage de ces roulettes augmente le nombre de pièces et la complexité de l'entraîneur, et par conséquent son coût de fabrication.

Le but de la présente invention est de remédier à ces inconvénients en réalisant un entraîneur de grille-pain équipé d'un amortisseur qui coulisse parfaitement le long de la colonne verticale tout en conservant un encombrement et un nombre de pièces réduit.

Selon l'invention, le logement de l'entraîneur étant tubulaire et le piston de l'amortisseur étant formé d'une pièce également tubulaire, lesdits logement et piston sont montés coaxialement autour de la colonne verticale. L'amortisseur ainsi agencé n'augmente pas l'encombrement de l'entraîneur et le guidage vertical est réalisé par le piston.

De manière avantageuse, la hauteur H du piston de l'amortisseur est supérieure à la hauteur h de l'entraîneur pour diminuer la friction et donc les risques de blocage du piston sur la colonne.

La pièce tubulaire formant le piston de l'amortisseur comporte de préférence, respectivement en ses extrémités inférieure et supérieure, deux paliers en contact avec la colonne verticale afin d'améliorer le glissement du piston le long de la colonne et de tolérer une légère déformation de linéarité de la colonne.

D'autres caractéristiques et avantages de l'invention ressortiront de la description qui va suivre, donnée à titre d'exemple non limitatif, en référence aux dessins annexés dans lesquels:
- la figure 1 est une vue en coupe partielle simplifiée d'un grille-pain suivant l'invention en laquelle le chariot porte-pain est en position d'éjection ;
- la figure 2 est une vue analogue à la figure 1 en laquelle le chariot porte-pain est en position de grillage ;
- la figure 3 est une vue analogue à la figure 1 en laquelle le chariot porte-pain est en position de sécurité ;
- la figure 4 est une vue analogue à la figure 1 en laquelle le chariot porte-pain est en position surélevée ;
- la figure 5 est une vue schématique d'un entraîneur lié à deux chariots porte-pain réalisé selon l'invention ;
- la figure 6 est une vue en coupe partielle simplifiée d'un deuxième mode de réalisation du grille-pain selon l'invention.

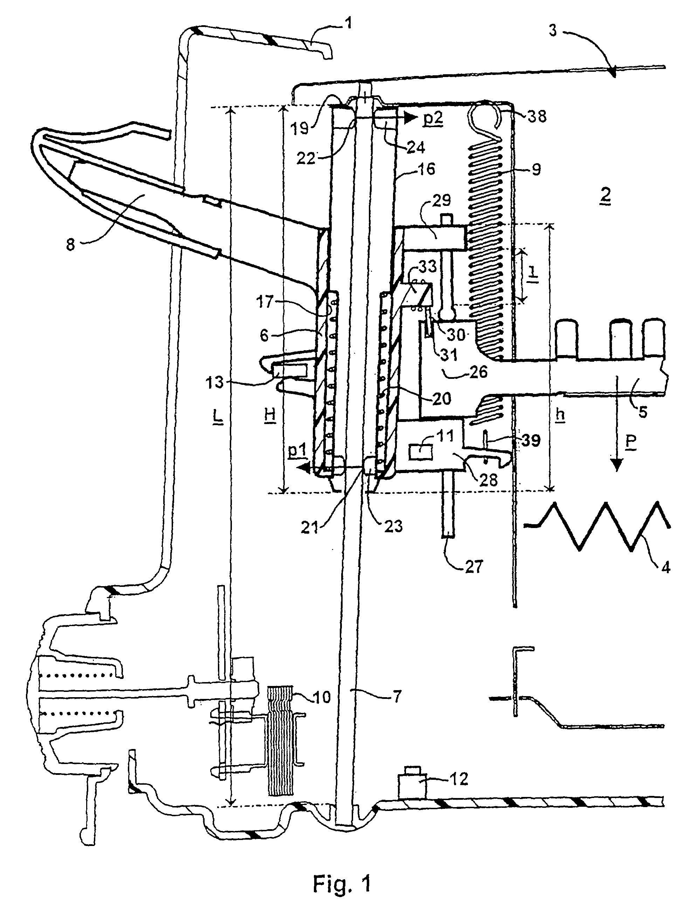

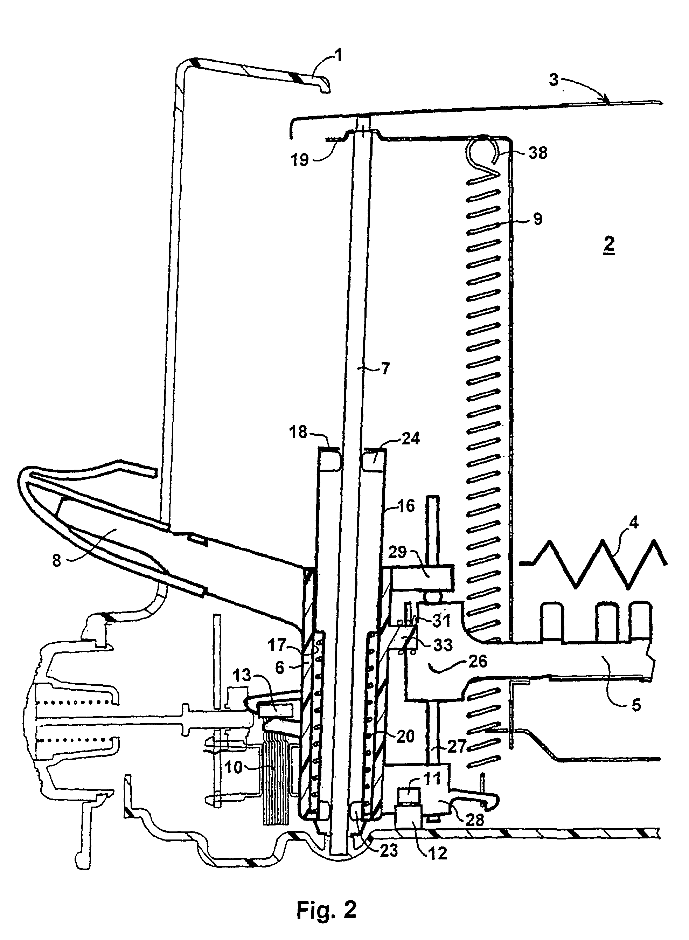

A la figure 1, on a représenté un grille-pain dont le boîtier 1 comporte une enceinte de grillage 2 présentant une ouverture supérieure 3 pour l'introduction de tranches de pain et renfermant au moins un élément chauffant électrique 4, au moins un chariot porte-pain 5 mobile verticalement dans l'enceinte 2 entre une position d'éjection, représentée à la figure 1, et une position de grillage, représentée à la figure 2. Un entraîneur 6, lié au chariot porte-pain 5 et monté coulissant sur une colonne verticale 7, comporte une poignée 8 permettant d'abaisser le chariot porte-pain 5 de la position d'éjection, en laquelle l'entraîneur 6 est rappelé par un moyen élastique 9, à la position de grillage en laquelle l'entraîneur 6 est retenu par un moyen déverrouillable 10 et en laquelle un doigt 11 solidaire de l'entraîneur ferme un interrupteur de fin de course 12.

De manière connue, l'élément chauffant 4 est constitué par une résistance électrique ou un tube à quartz. Pour le moyen de rappel élastique 9 on peut utiliser un ressort à boudin présentant une raideur suffisante pour ramener le chariot porte-pain 5 garni de tranches de pain et l'entraîneur 6 en position d'éjection à la fin d'une opération de grillage. Le moyen déverrouillable de retenue de l'entraîneur 6 en position de grillage peut comprendre un électroaimant 10 apte à retenir une pièce ferromagnétique 13 solidaire de l'entraîneur. L'interrupteur de fin de course 12 sert à envoyer un signal indiquant le début d'une opération de grillage à des moyens de commande du grille-pain. L'électroaimant 10 est alors alimenté en courant jusqu'à ce qu'un compteur de temps ou un capteur de dorage envoie un signal indiquant la fin de l'opération de grillage. Dans le mode de réalisation décrit, l'interrupteur de fin de course 12 sert aussi à alimenter l'élément chauffant 4 tant que l'entraîneur 6 est en position de grillage.

L'entraîneur 6 est équipé d'un amortisseur de remontée comprenant un piston 16 coulissant verticalement dans un logement 17 solidaire de l'entraîneur sur une course déterminée et dont la face supérieure 18 est susceptible de venir en contact avec une butée 19 située dans la partie haute du boîtier 1, ainsi qu'un moyen élastique 20 disposé entre ledit piston 16 et l'entraîneur 6. Cette disposition permet d'amortir le retour du chariot porte-pain en position d'éjection afin d'éviter l'expulsion en dehors du grille-pain des tranches de pain. L'amortissement de l'entraîneur permet aussi de réduire les bruits désagréables et les vibrations qui peuvent éventuellement détériorer l'élément chauffant s'il s'agit d'un tube à quartz.

Selon l'invention, le logement 17 de l'entraîneur étant tubulaire et le piston 16 de l'amortisseur étant formé d'une pièce également tubulaire, lesdits logement 17 et piston 16 sont montés coaxialement autour de la colonne verticale 7. Grâce à cette disposition, le piston 16 de l'amortisseur peut coulisser le long de la colonne verticale 7 et guider le mouvement vertical de l'entraîneur 6. De plus, l'amortisseur ainsi disposé n'augmente pas l'encombrement de l'entraîneur 6.

De manière avantageuse, la hauteur H du piston 16 de l'amortisseur est supérieure à la hauteur h de l'entraîneur 6. Ceci augmente la distance entre les points de contact (21,22) du piston 16 avec la colonne verticale 7 ; distance qui est alors sensiblement égale à la hauteur H du piston. Cette distance étant plus grande, les pressions p1 et p2 exercées aux points de contact (21,22) avec la colonne 7 sont plus faible pour un poids constant P supporté par le chariot porte-pain. Ainsi, les risques de blocage du piston sur la colonne sont diminués.

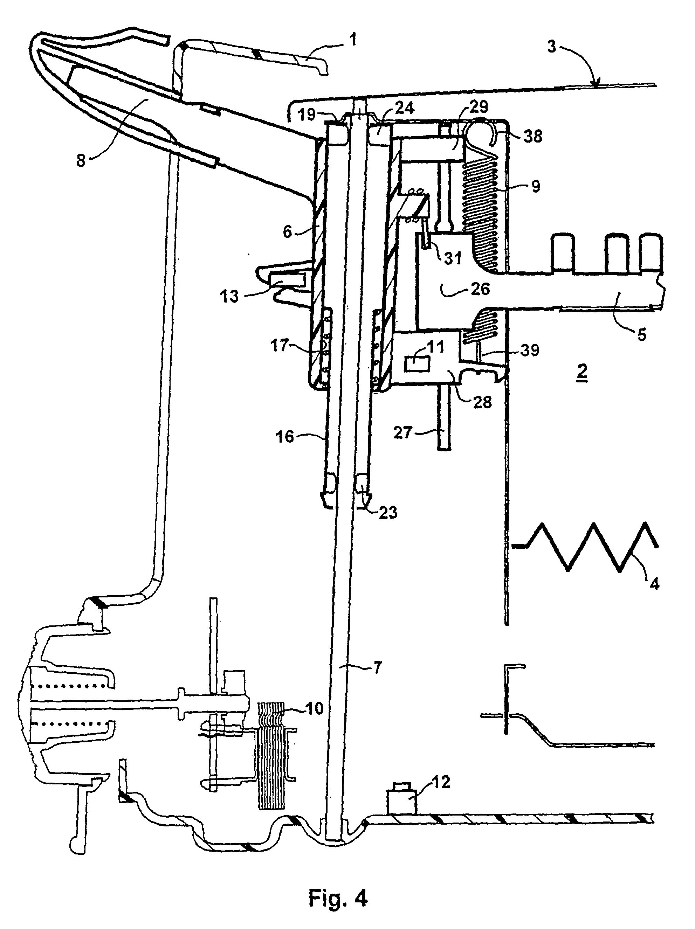

Il est important de noter que malgré la hauteur H du piston supérieure à la hauteur h de l'entraîneur la course verticale utile du chariot porte-pain reste sensiblement égale à la course L-h que l'on peut obtenir avec un entraîneur non muni d'amortisseur, L représentant la hauteur de la colonne 7. En effet, le chariot peut passer de la position de grillage représentée à la figure 2 à la position représentée à la figure 4 en laquelle la face supérieure 18 du piston 16 est pratiquement au niveau de la face supérieure de l'entraîneur. Cette position sera détaillée ci-après.

La pièce tubulaire formant le piston 16 de l'amortisseur peut comporter, respectivement en ses extrémités inférieure et supérieure aux points de contacts (21,22), deux paliers (23,24) en contact avec la colonne verticale 7 afin d'améliorer le glissement du piston 16 le long de la colonne et de tolérer une légère déformation de la colonne.

De préférence, la raideur et la disposition du moyen élastique 20 de l'amortisseur sont déterminées de manière à permettre la compression de l'amortisseur depuis la position d'éjection, représentée à la figure 1, à une position surélevée, représentée à la figure 4, en exerçant une traction vers le haut sur la poignée 8 de l'entraîneur 6. Cette disposition permet de maintenir une grande partie des tranches de pain dans l'enceinte de grillage afin de les maintenir au chaud quand le grille-pain est en position d'éjection. Ensuite, l'utilisateur peut augmenter la sortie des tranches de pain en exerçant une traction vers le haut sur la poignée afin de saisir plus facilement les tranches sans risque de se brûler.

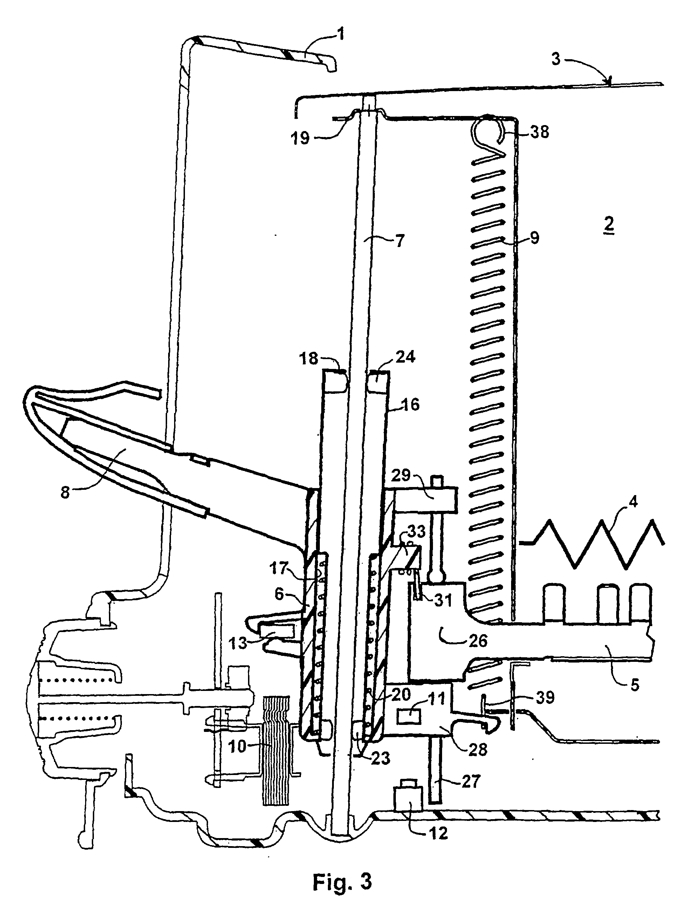

L'encombrement réduit de l'entraîneur 6 ainsi réalisé permet un montage particulier de l'entraîneur sur le chariot porte-pain 5 afin d'augmenter la sécurité de fonctionnement du grille-pain. Dans ce but, l'entraîneur est monté mobile relativement à l'extrémité 26 du chariot porte-pain 5 selon une course verticale déterminée l pour occuper une position de sécurité, représentée à la figure 3, en laquelle le doigt 11 de l'entraîneur libère l'interrupteur de fin de course 12 après le 1 déverrouillage des moyens de retenue 10, même si le chariot porte-pain 5 est bloqué en position de grillage. Ainsi, même si une tranche de pain bloque le chariot 5 en position de grillage, la libération du contacteur de fin de course 12 coupe l'alimentation de l'élément chauffant 4 et l'on évite tout risque d'inflammation du pain.

Dans le mode de réalisation décrit, l'extrémité 26 du chariot est montée mobile sur un axe 27 entre une butée basse 28 et une butée haute 29 solidaires de l'entraîneur 6 et qui déterminent la course l. En position de grillage la butée haute 29 vient pratiquement en contact avec le chariot, tandis qu'en position de sécurité la butée basse 28 vient en contact avec le chariot sous l'action du moyen de rappel élastique 9 de l'entraîneur en position d'éjection.

Il est possible d'augmenter la force de rappel de l'entraîneur 6 en position de sécurité en disposant un ressort hélicoïdal de compression, non représenté, autour de l'axe 27 entre la butée haute 29 et le chariot 5.

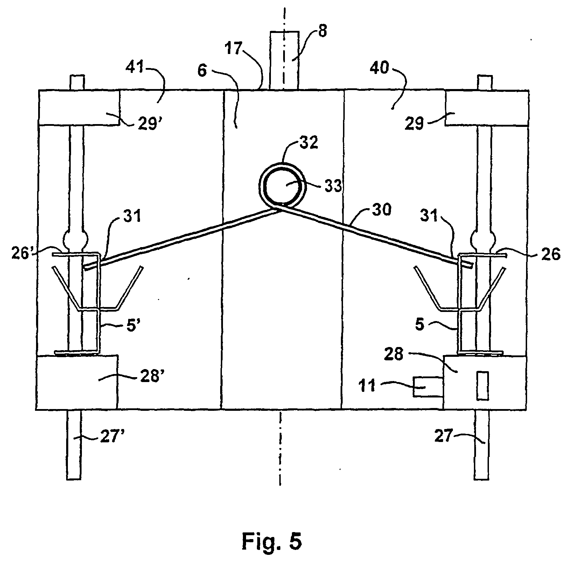

Dans le cas d'un grille-pain comportant deux chariots porte-pain (5,5') disposés parallèlement, l'entraîneur, représenté schématiquement à la figure 5, comporte deux ailes (40,41) s'étendant de chaque côté du logement 17 du piston amortisseur et sur lesquelles sont montées mobiles l'extrémité (26,26') des deux chariots porte-pain (5,5'), chaque aile comportant un axe (27,27') disposé entre une butée basse (28,28') et une butée haute (29,29').

Toutefois la solution décrite précédemment pour rappeler l'entraîneur en position de sécurité impose dans ce cas l'emploi de deux ressorts de compression. Comme représenté sur les figures, il est alors avantageux de rappeler l'entraîneur 6 en position de sécurité grâce à une seule épingle élastique 30 dont la partie médiane 32 est solidaire de l'entraîneur 6 et dont les extrémités 31 exercent une pression sur la face supérieure des deux chariots porte-pain (5,5'). La partie médiane 32 de l'épingle peut comporter plusieurs spires montées sur un bossage 33 de l'entraîneur.

Dans le but de simplifier la construction de l'entraîneur et donc de réduire les coûts de fabrication les deux ailes (40,41) et le logement 17 de l'entraîneur 6 sont réalisés en une seule pièce de matière plastique moulée.

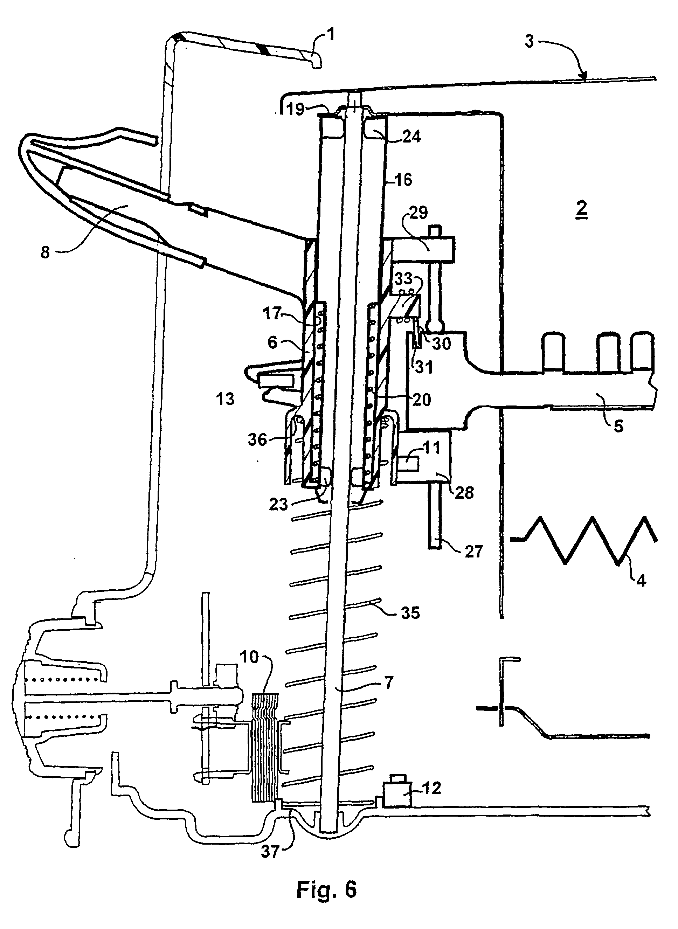

Suivant un mode de réalisation particulier, représenté à la figure 6, le moyen élastique de rappel de l'entraîneur en position d'éjection comprend un ressort de compression 35 disposé coaxialement à la colonne verticale 7 entre la face inférieure 36 de l'entraîneur 6 et le fond 37 du boîtier. Cette disposition limite l'encombrement de l'ensemble du mécanisme de remontée du chariot porte-pain. La force exercée sur l'entraîneur par le ressort ainsi disposé est coaxiale à la colonne verticale 7 ce qui limite les frottements aux points de contacts (21,22) du piston 16 sur la colonne 7. De plus le montage de ce ressort de compression 35 est plus aisé que le montage du ressort de traction à boudin 9 car il suffit de l'enfiler sur la colonne, au lieu de. fixer les deux crochets (38,39) au boîtier et à l'entraîneur.

Le grille-pain ainsi réalisé comporte un entraîneur muni d'un amortisseur coulissant parfaitement de la position de grillage à la position d'éjection, et ce sans augmenter la complexité et l'encombrement du dispositif.

## Revendications

1. Grille-pain dont le boîtier (1) comporte une enceinte de grillage (2) présentant une ouverture supérieure (3) pour l'introduction du pain et renfermant au moins un élément chauffant électrique (4), au moins un chariot porte-pain (5) mobile verticalement dans l'enceinte (2) entre une position d'éjection et une position de grillage, un entraîneur (6) lié au chariot porte-pain (5), monté coulissant sur une colonne verticale (7), et comportant une poignée (8) permettant d'abaisser le chariot porte-pain (5) de la position d'éjection, en laquelle l'entraîneur (6) est rappelé par un moyen élastique (9), à la position de grillage en laquelle l'entraîneur (6) est retenu par un moyen déverrouillable (10) et en laquelle un doigt (11) solidaire de l'entraîneur ferme un interrupteur de fin de course (12), ainsi qu'un amortisseur de remontée comprenant un piston (16) coulissant verticalement dans un logement (17) solidaire de l'entraîneur sur une course déterminée et dont la face supérieure (18) est susceptible de venir en contact avec une butée (19) située dans la partie haute du boîtier (1), ainsi qu'un moyen élastique (20) disposé entre ledit piston (16) et l'entraîneur (6), **caractérisé en ce que** le logement (17) étant tubulaire et le piston (16) de l'amortisseur étant formé d'une pièce également tubulaire, lesdits logement (17) et piston (16) sont montés coaxialement autour de la colonne verticale (7).

2. Grille-pain selon la revendication 1, **caractérisé en ce que** la hauteur H du piston (16) de l'amortisseur est supérieure à la hauteur h de l'entraîneur (6).

3. Grille-pain selon la revendication 2, **caractérisé en ce que** la pièce tubulaire formant le piston (16) de l'amortisseur comporte, respectivement en ses extrémités inférieure et supérieure, deux paliers (23,24) en contact avec la colonne verticale (7).

4. Grille-pain selon la revendication 2 ou 3, **caractérisé en ce que** la raideur et la disposition du moyen élastique (20) de l'amortisseur sont déterminés de manière à permettre la compression de l'amortisseur depuis la position d'éjection à une position surélevée en exerçant une traction vers le haut sur la poignée (8) de l'entraîneur (6).

5. Grille-pain selon l'une quelconque des revendications 1 à 4, **caractérisé en ce que** l'entraîneur (6) est monté mobile relativement à l'extrémité (26) du chariot porte-pain (5) selon une course verticale déterminée l pour occuper une position de sécurité en laquelle le doigt (11) de l'entraîneur libère l'interrupteur de fin de course (12) après le déverrouillage des moyens de retenue (10), même si le chariot porte-pain (5) est bloqué en position de grillage.

6. Grille-pain selon la revendication 5 dont l'entraîneur (6) est monté mobile relativement aux extrémités (26,26') de deux chariots porte-pain (5,5') disposés parallèlement, **caractérisé en ce que** l'entraîneur (6) est rappelé en position de sécurité par une seule épingle élastique (30) dont la partie médiane (32) est solidaire de l'entraîneur (6) et dont les extrémités (31) exercent une pression sur la face supérieure des deux chariots porte-pain (5,5').

7. Grille-pain selon la revendication 6, **caractérisé en ce que** l'entraîneur (6) comporte deux ailes (40,41) s'étendant de chaque côté du logement (17) du piston (16) amortisseur et sur lesquelles sont montées mobiles l'extrémité (26,26') des deux chariots porte-pain (5,5'), lesdites ailes et le logement de l'entraîneur étant réalisés en une seule pièce de matière plastique moulée.

8. Grille-pain selon l'une quelconque des revendications 1 à 7, **caractérisé en ce que** le moyen élastique de rappel de l'entraîneur (6) en position d'éjection comprend un ressort de compression (35) disposé coaxialement à la colonne verticale (7) entre la face inférieure (36) de l'entraîneur et le fond (37) du boîtier (1).

## Patentansprüche

1. Toaster, dessen Gehäuse (1) einen Röstraum (2) aufweist, der eine obere Öffnung (3) zum Einführen des Brots besitzt und mindestens ein elektrisches Heizelement (4) umschließt, mindestens einen Brothalterschlitten (5), der in dem Raum (2) zwischen einer Auswerfposition und einer Röstposition senkrecht beweglich ist, und einen Mitnehmer (6), der mit dem Brothalterschlitten (5) verbunden ist, auf einer senkrechten Stange (7) gleitend angebracht ist und einen Griff (8) aufweist, mit dem der Brothalterschlitten (5) aus der Auswerfposition, in welche der Mitnehmer (6) durch ein elastisches Mittel (9) zurückgestellt ist, in die Röstposition gesenkt werden kann, in welcher der Mitnehmer (6) durch ein entriegelbares Mittel (10) gehalten ist und ein mit dem Mitnehmer fest verbundener Finger (11) einen Endstellungsschalter (12) schließt, sowie einen Rückstelldämpfer, der einen Kolben (16) aufweist, welcher über einen bestimmten Weg in einer Aufnahme (17) senkrecht gleitet, die mit dem Mitnehmer fest verbunden ist, und dessen obere Fläche (18) mit einem Anschlag (19) in Berührung gelangen kann, der sich im oberen Teil des Gehäuses (1) befindet, sowie ein elastisches Mittel (20), das zwischen dem Kolben (16) und dem Mitnehmer (6) angeordnet ist, **dadurch gekennzeichnet, dass** die Aufnahme (17) und der Kolben (16) um die senkrechte Stange (7) koaxial angebracht sind, da die Aufnahme (17) röhrenförmig ist und der Kolben (16) des Dämpfers durch ein Teil ausgebildet ist, das ebenfalls röhrenförmig ist.

2. Toaster nach Anspruch 1, **dadurch gekennzeichnet, dass** die Höhe H des Kolbens (16) des Dämpfers größer ist als die Höhe h des Mitnehmers (6).

3. Toaster nach Anspruch 2, **dadurch gekennzeichnet, dass** das röhrenförmige Teil, das den Kolben (16) des Dämpfers bildet, an seinem unteren bzw. oberen Ende zwei Lager (23, 24) aufweist, welche die senkrechte Stange (7) berühren.

4. Toaster nach Anspruch 2 oder 3, **dadurch gekennzeichnet, dass** die Steifigkeit und die Anordnung des elastischen Mittels (20) des Dämpfers so bestimmt sind, dass das Zusammendrücken des Dämpfers von der Auswerfposition bis zu einer überhöhten Position möglich ist, indem auf den Griff (8) des Mitnehmers (6) ein Zug nach oben ausgeübt wird.

5. Toaster nach einem der Ansprüche 1 bis 4, **dadurch gekennzeichnet, dass** der Mitnehmer (6) in bezug zum Ende (26) des Brothalterschlittens (5) beweglich entlang eines bestimmten senkrechten Weges l angebracht ist, um eine Sicherheitsposition einzunehmen, in welcher der Finger (11) des Mitnehmers den Endstellungsschalter (12) nach der Entriegelung der Rückhaltemittel (10) freigibt, auch wenn der Brothalterschlitten (5) in der Röstposition blockiert ist.

6. Toaster nach Anspruch 5, dessen Mitnehmer (6) in bezug zu den Enden (26, 26') von zwei parallel angeordneten Brothalterschlitten (5, 5') beweglich angebracht ist, **dadurch gekennzeichnet, dass** der Mitnehmer (6) durch eine einzige elastische Klammer (30) in die Sicherheitsposition zurückgestellt wird, wobei der mittlere Teil (32) der Klammer fest mit dem Mitnehmer (6) verbunden ist und ihre Enden (31) auf die obere Fläche der beiden Brothalterschlitten (5, 5') einen Druck ausüben.

7. Toaster nach Anspruch 6, **dadurch gekennzeichnet, dass** der Mitnehmer (6) zwei Flügel (40, 41) aufweist, die sich auf jede Seite der Aufnahme (17) des Dämpferkolbens (16) erstrecken und auf denen die Enden (26, 26') der beiden Brothalterschlitten (5, 5') beweglich angebracht sind, wobei die Flügel und die Aufnahme des Mitnehmers durch ein einziges Kunststoffformteil ausgebildet sind.

8. Toaster nach einem der Ansprüche 1 bis 7, **dadurch gekennzeichnet, dass** das elastische Mittel zum Zurückstellen des Mitnehmers (6) in die Auswerfposition eine Druckfeder (35) aufweist, die in bezug zur senkrechten Stange (7) zwischen der unteren Fläche (36) des Mitnehmers und dem Boden (37) des Gehäuses (1) koaxial angeordnet ist.

## Claims

1. A toaster whose casing (1) includes a toasting enclosure (2) presenting a top opening (3) for inserting bread and containing at least one electrical heater element (4), at least one bread carriage (5) vertically movable in the enclosure (2) between an ejection position and a toasting position, a driver (6) connected to the bread carriage (5), slidably mounted on a vertical column (7), and including a handle (8) enabling the bread carriage (5) to be lowered from the ejection position towards which the driver (6) is urged by resilient means (9), to the toasting position in which the driver (6) is retained by unlockable means (10) and in which a finger (11) secured to the driver closes an end-of-stroke switch (12), and also an up-stroke shock absorber comprising a piston (16) vertically slidable over a determined stroke in a housing (17) secured to the driver, with the top face (18) of the piston being suitable for coming into contact with an abutment (19) situated in the top portion of the casing (1), and also resilient means (20) disposed between said piston (16) and the driver (6), the toaster being **characterized in that** the housing (17) is tubular and the piston (16) of the shock absorber is formed by a part that is likewise tubular, said housing (17) and piston (16) being mounted coaxially about the vertical column (7).

2. A toaster according to claim 1, **characterized in that** the height H of the piston (16) of the shock absorber is greater than the height h of the driver (6).

3. A toaster according to claim 2, **characterized in that** the tubular part forming the piston (16) of the shock absorber includes respectively at its bottom and top ends two bearings (23, 24) in contact with the vertical column (7).

4. A toaster according to claim 2 or claim 3, **characterized in that** the stiffness and the disposition of the resilient means (20) of the shock absorber are determined in such a manner as to allow the shock absorber to be compressed from the ejection position to an extra-high position by exerting upward traction on the handle (8) of the driver (6).

5. A toaster according to any one of claims 1 to 4, **characterized in that** the driver (6) is mounted to move relative to the end (26) of the bread carriage (5) along a determined vertical stroke ℓ to occupy a safety position in which the finger (11) of the driver releases the end-of-stroke switch (12) after unlocking of the retaining means (10), even if the bread carriage (5) is blocked in the toasting position.

6. A toaster according to claim 5, in which the driver (6) is mounted to move relative to the ends (26, 26') of two bread carriages (5, 5') disposed in parallel, the toaster being **characterized in that** the driver (6) is urged towards the safety position by a single safety-pin spring (30) whose middle portion (32) is secured to the driver (6) and whose ends (31) exert pressure on the top faces of the two bread carriages (5, 5').

7. A toaster according to claim 6, **characterized in that** the driver (6) comprises two limbs (40, 41) extending on either side of the housing (17) for the piston (16) of the shock absorber, and on which the ends (26, 26') of the two bread carriages (5, 5') are movably mounted, said limbs and the housing for the driver being made as a one-piece molding of plastics material.

8. A toaster according to any one of claims 1 to 7, **characterized in that** the resilient return means for returning the driver (6) into the ejection position comprise a compression spring (35) disposed coaxially with the vertical column (7) between the bottom face (36) of the driver and the bottom (37) of the casing (1).
